# FASCICULE DE BREVET EUROPEEN

(11) **EP 3 408 081 B1**
(45) Date de publication et mention de la délivrance du brevet: **28.10.2020**
(21) Numéro de dépôt: 17702582.2
(22) Date de dépôt: 26.01.2017
(51) Int. Cl.: B31F 1/30, F16G 3/16

(54) **DISPOSITIF COMPRENANT UN CYLINDRE D'ENTRAÎNEMENT ET UN REVÊTEMENT AUTO-AGRIPPANT, PROCÉDÉ ET MACHINE ASSOCIÉS**
VORRICHTUNG MIT EINER EINZUGSWALZE UND EINEM SELBSTKLEBENDEN BEFESTIGUNGSELEMENT SOWIE ZUGEHÖRIGES VERFAHREN UND MASCHINE
DEVICE COMPRISING A FEED ROLL AND A SELF-ADHESIVE FASTENER, AND ASSOCIATED METHOD AND MACHINE

(30) Priorité: 27.01.2016 FR 1650662
(43) Date de publication de la demande: 05.12.2018
(73) Titulaire: Bricq, 16220 Montbron (FR)
(72) Inventeur: GEISS, Raymond, 16220 Vouthon (FR); NABOULET, Patrick, 24600 Allemans (FR)
(74) Mandataire: Lavoix
(86) Numéro de dépôt international: PCT/EP2017/051687
(87) Numéro de publication internationale: WO 2017/129702

(56) Documents cités:
- GB-A- 470 261
- US-A1- 2013 079 206

## Description

La présente invention concerne un dispositif d'entraînement comprenant au moins un cylindre d'entraînement présentant une surface externe et au moins une bande de revêtement présentant une face interne et une face externe, la face interne de la bande de revêtement étant enroulée autour d'au moins une partie de la surface externe du cylindre d'entraînement.

Un tel dispositif peut être utilisé dans tout type de machine nécessitant l'entraînement d'une bande, d'une courroie, d'une ceinture ou d'éléments filaires.

En particulier, un tel dispositif est, par exemple, utilisé dans une machine destinée à la fabrication de carton ondulé comprenant au moins une courroie. Le dispositif entraîne la courroie qui, à son tour, entraîne le carton.

La bande de revêtement permet, par exemple, d'améliorer l'adhérence entre le cylindre d'entraînement et la courroie par friction entre la bande et la courroie. Ainsi, la mise en rotation du cylindre d'entraînement est, intégralement ou presque, transmise à la courroie en limitant la perte de mouvement due à un glissement de la bande sur le cylindre.

Une technique usuelle consiste à coller des bandes de revêtement directement sur la surface externe du cylindre.

Cependant, le revêtement s'use et doit être remplacé régulièrement, par exemple tous les 1 à 3 ans. Il est alors nécessaire de décoller les bandes de revêtement du cylindre, puis de poncer le cylindre avant de coller de nouvelles bandes. Ce procédé dure au minimum deux jours. Pendant ce temps, la machine comprenant le dispositif d'entraînement est arrêtée. Cela représente un important manque à gagner pour le propriétaire de la machine.

Une autre technique consiste à vulcaniser du caoutchouc directement sur le cylindre d'entraînement.

Lorsque le revêtement est remplacé, il est arraché du cylindre d'entraînement qui doit ensuite être poncé. Enfin, du caoutchouc est de nouveau vulcanisé sur le cylindre. De même l'interruption de la machine est généralement supérieure à deux jours.

Pour réduire le temps d'interruption de machine, le document WO 2013/044227 décrit un cylindre pourvu d'une bande interchangeable enroulée autour du cylindre. Deux extrémités de la bande sont liées, par exemple, par des agrafes.

Cependant, pour que la bande ne glisse pas sur le rouleau, au moins un organe fixant la bande au cylindre, par exemple des rivets, est ajouté lors de la mise en œuvre du dispositif décrit dans le document WO 2013/044227.

Ces rivets compliquent l'intervention de remplacement de la bande car ils doivent être retirés pour pouvoir enlever la bande. Les extrémités de la nouvelle bande doivent en outre être liées.

De plus, entre les rivets, le matériau est susceptible de former des plis autour du rouleau. La qualité du produit fabriqué par la machine est alors susceptible d'être dégradée.

GB 470 261 décrit une installation adaptée pour entourer un cylindre, l'installation étant maintenue autour du cylindre par le serrage de ses deux extrémités l'une vers l'autre, les extrémités étant fixées l'une à l'autre.

WO 97/32805 décrit un revêtement remplaçable pour rouleau. Le revêtement comprend une pluralité de protubérances faisant saillie vers l'extérieur à partir d'un côté de la surface et une pluralité de protubérances d'accrochage faisant saillie depuis un côté opposé du revêtement.

Un but de l'invention est donc de fournir un dispositif apte à entraîner efficacement une courroie et dont l'entretien ne nécessite pas une longue interruption de fonctionnement.

A cet effet, l'invention a pour objet un dispositif du type précité, selon la revendication 1.

Pour remplacer la bande de revêtement, celle-ci est simplement retirée du rouleau grâce à la fixation auto-agrippante et une nouvelle bande est simplement refixée sur le cylindre. Le temps d'intervention est ainsi fortement réduit.

Le dispositif selon l'invention peut comprendre l'une ou plusieurs des caractéristiques suivantes, prise(s) isolément ou suivant toute combinaison techniquement possible :
- au moins une partie de la surface externe du cylindre d'entraînement et au moins une partie de la face interne de la bande de revêtement sont fixées l'une à l'autre par la fixation auto-agrippante ;
- la fixation auto-agrippante comprend au moins une première bande de matériau auto-agrippant fixée sur la surface externe du cylindre d'entraînement et au moins une deuxième bande de matériau auto-agrippant complémentaire fixée sur la face interne de la bande de revêtement, le matériau auto-agrippant et le matériau auto-agrippant complémentaire étant aptes à coopérer pour fixer ensemble le cylindre d'entraînement et la bande de revêtement de manière amovible ;
- la bande de revêtement présente deux extrémités et qu'une deuxième bande de la fixation auto-agrippante est fixée sur la face interne à chaque extrémité de la bande de revêtement, la première bande étant fixée sur la surface externe du cylindre, la première bande coopérant avec les deuxièmes bandes ;

- la première bande s'étend sur toute la surface externe du cylindre d'entraînement et la deuxième bande s'étend sur toute la face interne de la bande de revêtement ;
- la bande de revêtement comprend une première couche anti-dérapante formant la face interne de la bande de revêtement, en dehors de la fixation auto-agrippante ;
- la bande de revêtement comprend une deuxième couche anti-dérapante formant la face externe de la bande de revêtement ;
- le dispositif comprend une pluralité de bandes de revêtement, la pluralité de bandes de revêtement étant placées côte à côte, chaque bande de revêtement étant enroulée autour d'une portion cylindrique du cylindre d'entraînement, la surface externe du cylindre d'entraînement et la face interne de chaque bande de revêtement étant fixées l'une à l'autre par une fixation auto-agrippante ; et
- chaque bande de revêtement présente deux extrémités, les deux extrémités des différentes bandes de revêtement n'étant pas alignées entre elles suivant une direction axiale du cylindre d'entraînement.

L'invention a aussi pour objet un procédé de mise en place d'un revêtement autour d'un cylindre d'entraînement présentant une surface externe selon la revendication 8.

L'invention a également pour objet une machine destinée à la fabrication de carton ondulé selon la revendication 9, comprenant une courroie d'onduleuse supérieure et une courroie d'onduleuse inférieure, les courroies d'onduleuse supérieure et inférieure comprenant chacune au moins un dispositif d'entraînement selon la revendication 1, le cylindre d'entraînement étant apte à entraîner la courroie associée, les courroies d'onduleuse supérieure et inférieure entraînant alors le carton entre les courroies d'onduleuse supérieure et inférieure.

L'invention sera mieux comprise à la lecture de la description qui va suivre, donnée uniquement à titre d'exemple et faite en se référant aux figures annexées parmi lesquelles :
- la figure 1 est une vue schématique en coupe d'un exemple de machine destinée à la fabrication de carton ondulé,
- la figure 2 est une vue en perspective d'un cylindre d'entraînement pourvu de bandes de revêtement de la machine de la figure 1,
- la figure 3 est une vue schématique en coupe d'une bande de revêtement du cylindre d'entraînement de la figure 2 selon un premier mode de réalisation,
- la figure 4 est une vue schématique selon la direction I en coupe du cylindre d'entraînement pourvu de la bande de revêtement selon le premier mode de réalisation,
- la figure 5 est une vue schématique en coupe du détail dans le cadre II de la figure 4,
- la figure 6 est une vue schématique en coupe d'une bande de revêtement du cylindre d'entrainement de la figure 2 selon un deuxième mode de réalisation, et
- la figure 7 est une vue schématique selon la direction I en coupe du cylindre d'entraînement pourvu de la bande de revêtement selon le deuxième mode de réalisation.

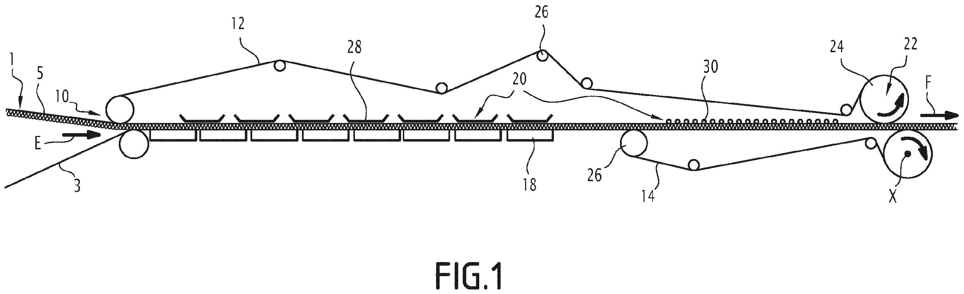

Une machine 10 destinée à la fabrication de carton ondulé 1 est représentée à la figure 1.

Elle comprend une courroie d'onduleuse supérieure 12 et une courroie d'onduleuse inférieure 14.

Elle comprend, en outre, des tables chauffantes 18 et un système d'application 20.

La machine présente une ligne de fabrication de carton ondulé présentant un sens de fabrication E, F.

En entrée de la ligne de fabrication au niveau de la flèche E de la figure 1, le carton ondulé est formé d'une première partie 3, comprenant une feuille de papier, et une deuxième partie 5, comprenant une feuille de papier et une feuille de papier ondulé.

La feuille ondulée est située entre les deux autres feuilles de papier.

En sortie de la ligne de fabrication, les deux feuilles de papier non ondulées et la feuille ondulée entre les feuilles non ondulées sont solidaires.

La courroie supérieure 12 s'étend le long de l'ensemble de la ligne de fabrication, au-dessus de la ligne de fabrication.

La courroie inférieure 14 s'étend le long d'une partie de la ligne de fabrication, en-dessous de la ligne de fabrication. Cette partie est située à la fin de la ligne de fabrication selon le sens de fabrication.

Cette partie de la ligne de fabrication est appelée la partie de traction. Le carton est tiré par les courroies supérieure 12 et inférieure 14.

Les courroies 12, 14 ont une largeur, prise suivant la ligne de fabrication perpendiculairement au sens de fabrication, supérieure ou égale à la largeur de carton désiré.

Les courroies 12, 14 sont, par exemple, réalisées en tissus en fibres synthétiques ou naturelles, tissés ou aiguilletés.

Les courroies d'onduleuse supérieure 12 et inférieure 14 présentent chacune un dispositif d'entraînement 22, apte à entraîner la courroie 12, 14 associée, de telle sorte que la courroie se déplace dans le sens de fabrication au niveau de la ligne de fabrication.

Les courroies d'onduleuse supérieure et inférieure 12, 14 sont ainsi aptes à entraîner le carton entre les courroies d'onduleuse supérieure et inférieure 12, 14 dans le sens de fabrication F.

Chaque dispositif d'entraînement 22 comprend par exemple au moins un cylindre d'entraînement 24 et au moins un tendeur 26.

Le cylindre d'entraînement 24 est mobile en rotation selon une direction X parallèle à la ligne de fabrication et perpendiculaire au sens de fabrication E, F.

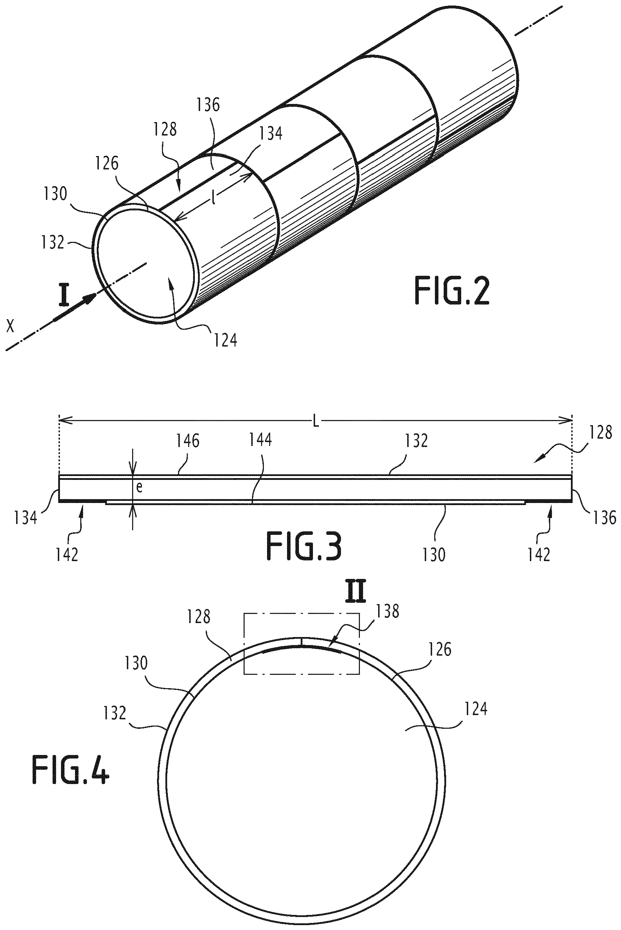

Le cylindre d'entraînement 24 sera décrit plus en détail par la suite, en rapport avec la figure 2.

La courroie 12, 14 entoure le cylindre d'entraînement et le tendeur 26 et les relie.

La courroie 12, 14 est tendue sur le cylindre d'entraînement par le tendeur 26.

Les dispositifs d'entraînement 22 sont tels que les courroies supérieure et inférieure 12, 14 se déplacent à la même vitesse.

Les tables chauffantes 18 s'étendent le long d'une partie de la ligne de fabrication, en-dessous de la ligne de fabrication. Elles sont situées en amont de la courroie inférieure 14 selon le sens de fabrication E, F.

Cette partie de la ligne de fabrication est appelée la partie d'application.

Les tables chauffantes 18 sont aptes à chauffer le carton passant sur elles.

Le système d'application 20 est notamment situé face aux tables chauffantes 18 en parallèle avec la courroie supérieure.

Le système d'application 20 comprend, par exemple, des patins 28 en face des tables chauffantes 18. Le système d'application 20 est apte à presser le carton contre les tables chauffantes 18 et ainsi, par exemple, à coller la première partie 3 et la deuxième partie 5 du carton entre les tables chauffantes 18 et le système d'application 20, de sorte à fabriquer du carton ondulé.

En variante, le système d'application 20 comprend des rouleaux d'application en face des tables chauffantes 18.

Dans le mode de réalisation représenté, le système d'application 20 comprend, par exemple, des rouleaux d'application 30 ou des patins dans la partie de traction en parallèle de la courroie supérieure 12.

Dans un mode de réalisation, la courroie supérieure 12 ne s'étend pas le long de l'ensemble de la ligne de fabrication.

Alternativement, au moins une courroie est remplacée par une pluralité de courroies.

Un cylindre d'entraînement 124 pourvu d'au moins une bande de revêtement est représenté sur la figure 2.

Le cylindre d'entraînement 124 est monté dans une machine comprenant un dispositif d'entraînement, par exemple, dans une machine destinée à la fabrication de carton ondulé, telle que décrite ci-dessus.

Le cylindre d'entraînement 124 est un cylindre de révolution s'étendant autour d'un axe principal X, représentant la direction transversale.

Le cylindre d'entraînement 124 présente une surface externe 126.

La bande de revêtement 128 est, par exemple, réalisée en caoutchouc ou en tissu.

La bande de revêtement 128 présente une face interne 130 et une face externe 132.

La face interne 130 de la bande de revêtement 128 est enroulée autour d'au moins une partie de la surface externe 126 du cylindre d'entraînement 124, ici autour d'une portion cylindrique du cylindre.

La bande de revêtement 128 présente une première extrémité 134 et une deuxième extrémité 136, les deux extrémités étant parallèles l'une à l'autre.

La première extrémité 134 et la deuxième extrémité 136 sont en contact lorsque la bande de revêtement est enroulée autour du cylindre 124, de sorte que tout le périmètre du cylindre est recouvert par la bande de revêtement.

La bande de revêtement 128 mise à plat a, par exemple, une forme rectangulaire.

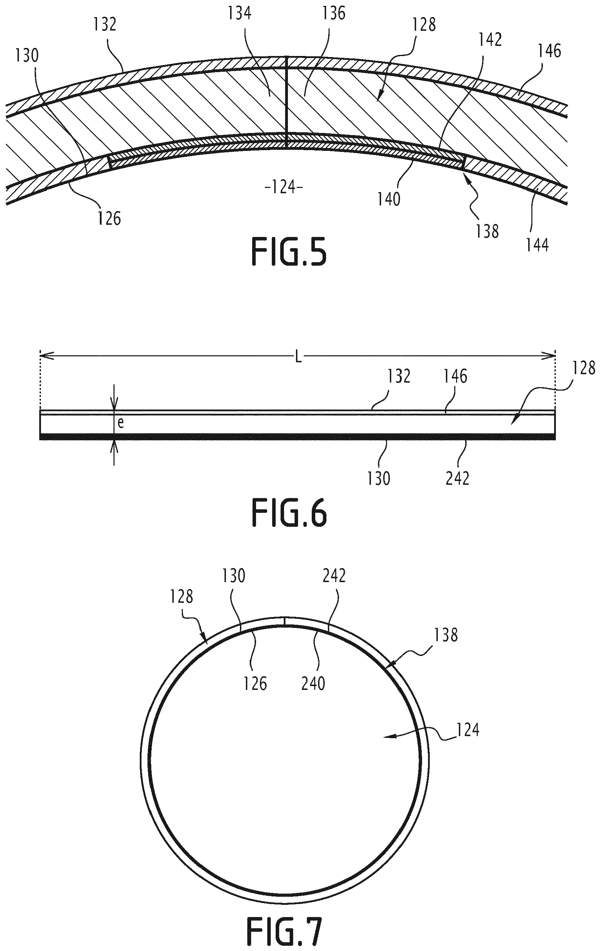

La bande de revêtement 128 a, par exemple, une épaisseur e comprise entre 2 mm et 30 mm, préférentiellement entre 4 mm et 20 mm. L'épaisseur e est mesurée comme étant la distance entre la face interne 130 et la face externe 132, comme représenté sur les figures 3 et 6.

La bande de revêtement 128 a, par exemple, une largeur I comprise entre 50 mm et 1500 mm, préférentiellement entre 250 mm et 350 mm. La largeur I est mesurée selon la direction transversale lorsque la bande de revêtement 128 est enroulée autour du cylindre, comme représenté sur la figure 2.

Comme indiqué précédemment, chaque bande de revêtement 128 a une longueur L sensiblement égale à la circonférence de la surface externe 126 du cylindre d'entraînement 124. La longueur L est mesurée perpendiculairement à la largeur, entre la première extrémité 134 et la deuxième extrémité 136.

La bande de revêtement 128 est fixée autour du cylindre d'entraînement 124 par une fixation auto-agrippante 138.

Selon un mode de réalisation, au moins une partie de la surface externe 126 du cylindre d'entraînement 124 et au moins une partie de la face interne 130 de la bande de revêtement 128 sont fixées l'une à l'autre par la fixation auto-agrippante 138.

La fixation auto-agrippante 138 comprend au moins une première bande 140, 240 de matériau auto-agrippant fixée sur la surface externe 126 du cylindre 124 et au moins une deuxième bande 142, 242 de matériau auto-agrippant complémentaire fixée sur la face interne 130 de la bande de revêtement 128.

Le matériau auto-agrippant et le matériau auto-agrippant complémentaire sont aptes à coopérer de façon réversible. Cela permettant notamment de fixer ensemble le cylindre d'entraînement 124 et la bande de revêtement 128 de manière amovible.

Le matériau auto-agrippant présente, par exemple, des crochets.

Le matériau auto-agrippant et le matériau auto-agrippant complémentaire présente, par exemple, des boucles.

Quand les deux matériaux sont pressées l'une contre l'autre, les crochets agrippent les boucles et maintiennent la première bande 140, 240 et la deuxième bande 142, 242 ensemble. Lorsqu'on tire dessus selon une direction perpendiculaire à la surface du matériau, les liens entre les crochets et les boucles se décrochent puis les crochets et les boucles reprennent leur position initiale, leur permettant ainsi de réaliser une nouvelle fixation amovible.

La résistance d'adhésion est, par exemple, au moins supérieur à 10N/cm.

La résistance au cisaillement est, par exemple, comprise entre 7 et 35 N/cm², et la résistance au pelage entre 0,5 et 4 N/cm.

Les première et deuxième bandes 140, 240, 142, 242 sont fixées respectivement au cylindre 124 et à la bande de revêtement 128, par exemple, par collage.

La colle utilisée a une résistance supérieure à la liaison réalisée par la fixation auto-agrippante 138.

La colle a une résistance au cisaillement supérieure à 20 N/cm² et une résistance au pelage supérieure à 5 N/cm.

Ainsi, la fixation auto-agrippante résiste à des efforts tangentiels, notamment liés aux frictions avec la courroie, mais la bande de revêtement est retirable du cylindre par un individu, les première et deuxième bandes 140, 240, 142, 242 restant accrochées respectivement au cylindre 124 et à la bande de revêtement 128.

Une premier mode de réalisation est représenté sur les figures 3 à 5.

Deux deuxièmes bandes 142 sont fixées sur la face interne 130 de la bande de revêtement 128, une deuxième bande étant fixée à chaque extrémité de la bande 128.

La première bande 140 coopère avec les deux deuxièmes bandes 142.

La première bande 140 et les deuxièmes bandes 142 ont respectivement une forme rectangulaire à plat.

La largeur de la première bande 140 et des deuxièmes bandes 142, mesurée selon la direction transversale, sont égales entre elles et à la largeur de la bande de revêtement 128.

La longueur de la première bande 140, mesurée perpendiculairement à la largeur, est sensiblement égale à la somme des longueurs de chaque deuxième bande 142.

Les deuxièmes bandes 142 ont, par exemple, la même longueur.

Ainsi, la première bande 140 et les deuxièmes bandes 142 se font face et se superposent afin de former la fixation auto-agrippante.

Avantageusement, la bande de revêtement 128 comprend une première couche anti-dérapante 144 formant la face interne 130 de la bande de revêtement 128, en dehors de la fixation auto-agrippante 138.

La première couche anti-dérapante 144 permet notamment d'éviter le glissement de la bande de revêtement 128 sur le cylindre 124 lorsqu'elle est soumise à des efforts tangentiels. Un tel glissement pourrait entraîner la formation de plis de la bande de revêtement 128 sur le cylindre 124. Dans le cas d'une machine destinée à la fabrication de carton ondulé, des plis peuvent entraîner des défauts locaux du carton produit.

Avantageusement, la bande de revêtement 128 comprend une deuxième couche anti-dérapante 146 formant la face externe 132 de la bande de revêtement 128.

La deuxième couche anti-dérapante 146 permet notamment d'améliorer l'adhérence par friction entre la bande de revêtement 128 et l'élément entraîné en rotation, soit dans le cas de la machine destinée à la fabrication de carton ondulé, une courroie.

Un deuxième mode de réalisation est représenté sur les figures 6 et 7.

La fixation auto-agrippante comprend de la même manière une première bande 240 de matériau auto-agrippant fixée sur la surface externe 126 du cylindre 124 et une deuxième bande 242 de matériau auto-agrippant complémentaire fixée sur la face interne 130 de la bande de revêtement 128.

La première bande 240 s'étend sur toute la surface externe 126 du cylindre 124.

La deuxième bande 242 s'étend sur toute la face interne 130 de la bande de revêtement 128.

Avantageusement, comme précédemment, la bande de revêtement 128 comprend une deuxième couche anti-dérapante 146 formant la face externe 132 de la bande de revêtement 128.

Un procédé de mise en place d'un revêtement autour d'un cylindre présentant une surface externe va maintenant être décrit.

Une bande de revêtement telle que décrite précédemment, par exemple selon le premier ou le deuxième mode de réalisation, est fournie.

La bande de revêtement est enroulé autour du cylindre d'entraînement.

Un opérateur appose, par exemple, une extrémité de la face interne de la bande de revêtement contre la surface externe du cylindre selon la direction transversale.

Puis le cylindre d'entraînement entre en rotation autour de son axe principal X. L'opérateur maintient la bande de revêtement, tel qu'elle s'enroule autour du cylindre sans former de plis et parallèlement à la circonférence du cylindre.

Le cylindre d'entraînement et la bande de revêtement sont fixés par la fixation auto-agrippante.

La bande de revêtement est facilement remplaçable. Un opérateur retire, par exemple, la bande de revêtement en tirant sur une extrémité suivant une direction sensiblement radiale. Une nouvelle bande de revêtement pourvue d'une deuxième bande de matériau auto-agrippant complémentaire est fournie et mise en place similairement sur le cylindre.

Dans le mode de réalisation représenté à la figure 2, le dispositif d'entraînement comprend une pluralité de bandes de revêtement 128 placées côte à côte, c'est-à-dire les unes à côté des autres selon la direction transversale X, de sorte à recouvrir l'ensemble du cylindre.

Deux bandes de revêtement 128 adjacentes sont en contact mais ne se chevauchent pas.

Les premières et deuxièmes extrémités 134, 136 des différentes bandes de revêtement ne sont de préférence pas alignées suivant la direction axiale du cylindre X.

Cela permet notamment de mieux répartir les efforts sur la circonférence du cylindre.

En variante, la fixation auto-agrippante comprend une première bande de matériau auto-agrippant fixée sur la face externe 132 à la première extrémité 134 de la bande de revêtement 128 et une deuxième bande de matériau auto-agrippant complémentaire fixée sur la face interne 130 à la deuxième extrémité 136 de la bande de revêtement 128.

La première extrémité 134 chevauche la deuxième extrémité 136, de sorte que la première bande coopère avec la deuxième bande.

La bande de revêtement a une épaisseur inférieure au niveau de la première extrémité et de la deuxième extrémité, de sorte que lorsqu'elles se chevauchent, la bande de revêtement présente une épaisseur totale constante autour du cylindre. La bande de revêtement a, par exemple, une épaisseur deux fois moindre là où elle se superpose avec elle-même par rapport au reste de la bande de revêtement.

La bande de revêtement a une longueur supérieure à la circonférence du cylindre d'entraînement d'une distance donnée. La distance correspond au chevauchement de la bande de revêtement.

Avantageusement, la bande de revêtement 128 comprend une première couche anti-dérapante formant la face interne de la bande de revêtement, en dehors de la fixation auto-agrippante.

Avantageusement, la bande de revêtement 128 comprend une deuxième couche anti-dérapante formant la face externe de la bande de revêtement, en dehors de la fixation auto-agrippante.

Afin de mettre en place la bande de revêtement 128 autour du cylindre, la deuxième extrémité de la bande de revêtement est apposée contre le cylindre, puis la bande de revêtement est enroulée autour du cylindre grâce à l'adhérence offerte par la première couche anti-dérapante. La première extrémité est placée sur la deuxième extrémité de sorte que les bandes de matériau complémentaire coopèrent pour former la fixation auto-agrippante.

L'intervention de remplacement de la bande de revêtement est rapide et ne nécessite pas une longue interruption de la machine comprenant le cylindre d'entraînement.

De plus, l'intervention est réalisable facilement par un opérateur sans nécessiter l'intervention de personnes spécialisées dans l'entretien de cylindre d'entraînement.

Le dispositif selon l'invention décrite ci-dessus peut être utilisé dans tout type de machine nécessitant l'entraînement d'une bande, d'une courroie, d'une ceinture ou d'éléments filaires.

## Revendications

1. Dispositif d'entraînement comprenant au moins un cylindre d'entraînement (124) présentant une surface externe (126) et au moins une bande de revêtement (128) présentant une face interne (130) et une face externe (132), la face interne (130) de la bande de revêtement (128) étant enroulée autour d'au moins une partie de la surface externe (126) du cylindre d'entraînement (124), et fixée autour du cylindre d'entraînement par une fixation auto-agrippante (138),
**caractérisé en ce que** le dispositif comprend une pluralité de bandes de revêtement (128),
chaque bande de revêtement (128) étant fixée autour du cylindre d'entraînement (124) par une fixation auto-agrippante (138), au moins une partie de la surface externe (126) du cylindre d'entraînement (124) et au moins une partie de la face interne (130) de chaque bande de revêtement (128) étant fixées l'une à l'autre par la fixation auto-agrippante (138),
chaque bande de revêtement (128) étant enroulée autour d'une portion cylindrique du cylindre d'entraînement (124),
la pluralité de bandes de revêtement (128) étant placées les unes à côté des autres selon un axe principal (X) du cylindre d'entraînement (124).

2. Dispositif selon la revendication 1, **caractérisé en ce que** la fixation auto-agrippante (138) comprend au moins une première bande (140, 240) de matériau auto-agrippant fixée sur la surface externe (126) du cylindre d'entraînement (124) et au moins une deuxième bande (142, 242) de matériau auto-agrippant complémentaire fixée sur la face interne (130) de la bande de revêtement (128), le matériau auto-agrippant et le matériau auto-agrippant complémentaire étant aptes à coopérer pour fixer ensemble le cylindre d'entraînement (124) et la bande de revêtement (128) de manière amovible.

3. Dispositif selon la revendication 2, **caractérisé en ce que** la bande de revêtement (128) présente deux extrémités (134, 136) et qu'une deuxième bande (142) de la fixation auto-agrippante (138) est fixée sur la face interne (130) à chaque extrémité (134, 136) de la bande de revêtement (128), la première bande (140) étant fixée sur la surface externe (126) du cylindre (124), la première bande (140) coopérant avec les deuxièmes bandes (142).

4. Dispositif selon la revendication 2, **caractérisé en ce que** la première bande (240) s'étend sur toute la surface externe (126) du cylindre d'entraînement (124) et la deuxième bande (242) s'étend sur toute la face interne (130) de la bande de revêtement (128).

5. Dispositif selon l'une quelconque des revendications 1 à 3, **caractérisé en ce que** la bande de revêtement (128) comprend une première couche anti-dérapante (144) formant la face interne (130) de la bande de revêtement (128), en dehors de la fixation auto-agrippante (138).

6. Dispositif selon l'une quelconque des revendications 1 à 5, **caractérisé en ce que** la bande de revêtement (128) comprend une deuxième couche anti-dérapante (146) formant la face externe (132) de la bande de revêtement (128).

7. Dispositif selon l'une quelconque des revendications 1 à 6, caractérisé en ce chaque bande de revêtement (128) présente deux extrémités (134, 136), les deux extrémités (134, 136) des différentes bandes de revêtement (128) n'étant pas alignées entre elles suivant une direction axiale (X) du cylindre d'entraînement (124).

8. Procédé de mise en place d'un revêtement autour d'un cylindre d'entraînement (124) présentant une surface externe (126), comprenant les étapes suivantes :
- fourniture d'une pluralité de bandes de revêtement (128) présentant une face interne (130) et une face externe (132),
- enroulage de chaque bande de revêtement (128) autour d'une portion cylindrique du cylindre d'entraînement (124), la pluralité de bandes de revêtement (128) étant placées les unes à côté des autres selon un axe principal (X) du cylindre d'entraînement (124)
- fixation autour du cylindre d'entraînement (124) de chaque bande de revêtement (128) par une fixation auto-agrippante (138), au moins une partie de la surface externe (126) du cylindre d'entraînement (124) et au moins une partie de la face interne (130) de chaque bande de revêtement (128) étant fixées l'une à l'autre par la fixation auto-agrippante (138).

9. Machine (10) destinée à la fabrication de carton ondulé comprenant une courroie d'onduleuse supérieure (12) et une courroie d'onduleuse inférieure (14), les courroies d'onduleuse supérieure et inférieure comprenant chacune au moins un dispositif d'entraînement selon l'une quelconque des revendications 1 à 7, le cylindre d'entraînement (124) étant apte à entraîner la courroie associée, les courroies d'onduleuse supérieure et inférieure (12, 14) entraînant alors le carton entre les courroies d'onduleuse supérieure et inférieure (12, 14).

## Patentansprüche

1. Antriebsvorrichtung, umfassend mindestens eine Antriebswalze (124), die eine äußere Fläche (126) aufweist, und mindestens einen Beschichtungsband (128), das eine innere Seite (130) und eine äußere Seite (132) aufweist, wobei die innere Seite (130) des Beschichtungsbands (128) um mindestens einen Teil der äußeren Fläche (126) der Antriebswalze (124) gewickelt und um die Antriebswalze durch einem Klettverschluss (138) fixiert ist,
**dadurch gekennzeichnet, dass** die Vorrichtung eine Vielzahl von Beschichtungsbändern (128) umfasst,
wobei jedes Beschichtungsband (128) um die Antriebswalze (124) durch einen Klettverschluss (138) fixiert ist, wobei mindestens einen Teil der äußeren Fläche (126) des Antriebswalze (124) und mindestens ein Teil der inneren Seite (130) jedes Beschichtungsbands (128) durch den Klettverschluss (138) aneinander fixiert sind,
wobei jedes Beschichtungsband (128) um einen zylindrischen Abschnitt des der Antriebswalze (124) gewickelt ist,
wobei die Vielzahl von Beschichtungsbändern (128) nebeneinander entlang einer Hauptachse (X) der Antriebswalze (124) platziert sind.

2. Vorrichtung nach Anspruch 1, **dadurch gekennzeichnet, dass** der Klettverschluss (138) mindestens ein erstes Band (140, 240) aus Klettmaterial umfasst, das auf der äußeren Seite (126) des Antriebszylinders (124) fixiert ist, und mindestens ein zweites Band (142, 242) aus komplementärem Klettmaterial, das auf der inneren Seite (130) des Beschichtungsbands (128) fixiert ist, wobei das Klettmaterial und das komplementäre Klettmaterial ausgelegt sind, um zusammenzuarbeiten, um zusammen die Antriebswalze (124) und das Beschichtungsband (128) auf abnehmbare Weise zu fixieren.

3. Vorrichtung nach Anspruch 2, **dadurch gekennzeichnet, dass** das Beschichtungsband (128) zwei Enden (124, 136) aufweist, und dass ein zweites Band (142) des Klettverschlusses (138) auf die innere Seite (130) an jedem Ende (134, 136) des Beschichtungsbands (128) fixiert ist, wobei das erste Band (140) auf der äußeren Fläche (126) des Zylinders (124) fixiert ist, wobei das erste Band (140) mit den zweiten Bändern (142) zusammenarbeitet.

4. Vorrichtung nach Anspruch 2, **dadurch gekennzeichnet, dass** sich das erste Band (240) über die gesamte äußere Fläche (126) der Antriebswalze (124) erstreckt und sich das zweite Band (242) über die gesamte innere Seite (130) des Beschichtungsbands (128) erstreckt.

5. Vorrichtung nach einem der Ansprüche 1 bis 3, **dadurch gekennzeichnet, dass** das Beschichtungsband (128) eine erste rutschfeste Schicht (144), die die innere Seite (130) des Beschichtungsbands (128) bildet, außerhalb des Klettverschlusses (138) umfasst.

6. Vorrichtung nach einem der Ansprüche 1 bis 5, **dadurch gekennzeichnet, dass** das Beschichtungsband (128) eine zweite rutschfeste Schicht (146) umfasst, die die äußere Seite (132) des Beschichtungsbands (128) bildet.

7. Vorrichtung nach einem der Ansprüche 1 bis 6, **dadurch gekennzeichnet, dass** jedes Beschichtungsband (128) zwei Enden (134, 136) aufweist, wobei die zwei Enden (134, 136) der verschiedenen Beschichtungsbänder (128) nicht miteinander gemäß einer axialen Richtung (X) des Antriebszylinders (124) ausgefluchtet sind.

8. Verfahren zum Anbringen einer Beschichtung um eine Antriebswalze (124), der eine äußere Fläche (126) aufweist, umfassend die folgenden Schritte:
- Zuführen einer Vielzahl von Beschichtungsbändern (128), die eine innere Seite (130) und eine äußere Seite (132) aufweisen,
- Wickeln jedes Beschichtungsbands (128) um einen zylindrischen Abschnitt der Antriebswalze (124), wobei die Vielzahl von Beschichtungsbändern (128) nebeneinander gemäß einer Hauptachse (X) der Antriebswalze (124) platziert sind,
- Befestigen um die Antriebswalze (124) jedes Beschichtungsbands (128) durch einen Klettverschluss (138), wobei mindestens einen Teil der äußeren Fläche (126) der Antriebswalze (124) und mindestens ein Teil der inneren Seite (130) jedes Beschichtungsbands (128) durch den Klettverschluss (138) aneinander befestigt sind.

9. Maschine (10), die für die Herstellung einer Wellpappe vorgesehen ist, umfassend einen oberen gewellten Riemen (12) und einen unteren gewellten Riemen (14), wobei der obere und untere gewellte Riemen jeweils mindestens eine Antriebsvorrichtung nach einem der Ansprüche 1 bis 7 umfassen, wobei die Antriebswalze (124) ausgelegt ist, um den assoziierten Riemen anzutreiben, wobei der obere und untere gewellte Riemen (12, 14) dann die Pappe zwischen dem oberen und unteren gewellten Riemen (12, 14) antreiben.

## Claims

1. Drive device comprising at least one drive cylinder (124) having an outer surface (126) and at least one cover strip (128) having an inner face (130) and an outer face (132), the inner face (130) of the cover strip (128) being wound around at least a portion of the outer surface (126) of the drive cylinder (124) and fastened around the drive cylinder (124) by a self-adhesive fastener (138),
**characterized in that** the device comprises a plurality of cover strips (128),
each cover strip (128) being fastened around the drive cylinder (124) by a self-adhesive fastener (138), at least a part of the outer surface (126) of the drive cylinder (124) and at least a part of the inner face (130) of each cover strip (128) being secured to each other by a self-adhesive fastener (138),
each cover strip (128) being wound around a cylindrical portion of the drive cylinder (124), the plurality of cover strips (128) being placed side by side along a main axis (X) of the drive cylinder (124).

2. Device according to claim 1, **characterized in that** the self-adhesive fastener (138) comprises at least one first strip (140, 240) of self-adhesive material attached to the outer surface (126) of the drive cylinder (124) and at least one second strip (142, 242) of complementary self-adhesive material fastened to the inner face (130) of the cover strip (128), wherein the self-adhesive material and the complementary self-adhesive material are able to interact to removably fasten together the drive cylinder (124) and the cover strip (128).

3. Device according to claim 2, **characterized in that** the cover strip (128) has two ends (134, 136), wherein a second strip (142) of the self-adhesive fastener (138) is fastened on the inner face (130) at each end (134, 136) of the cover strip (128), wherein the first strip (140) is fixed to the outer surface (126) of the cylinder (124), and wherein the first strip (140) interacts with the second strips (142).

4. Device according to claim 2, **characterized in that** the first strip (240) extends over the entire outer surface (126) of the drive cylinder (124), while the second strip (242) extends over the entire inner face (130) of the cover strip (128).

5. Device according to any one of the claims 1 to 3, **characterized in that** the cover strip (128) comprises a first non-slip layer (144) forming the inner face (130) of the cover strip (128) outside the self-adhesive fastener (138).

6. Device according to any one of the claims 1 to 5, **characterized in that** the cover strip (128) comprises a second non-slip layer (146) forming the outer face (132) of the cover strip (128).

7. Device according to any one of claims 1 to 6, **characterized in that** each cover strip (128) has two ends (134, 136), wherein the two ends (134, 136) of the different cover strips (128) are not aligned in the axial direction (X) of the drive cylinder (124).

8. Method of winding a cover strip around a drive cylinder (124) having an outer surface (126), comprising the steps of:
- providing a plurality of cover strips (128) having an inner face (130) and an outer face (132),
- winding each cover strip (128) around a cylindrical portion of the drive cylinder (124), the plurality of cover strips (128) being placed side by side along a main axis (X) of the drive cylinder (124)
- fastening each cover strip (128) around the drive cylinder (124) by a self-adhesive fastener (138), at least a part of the outer surface (126) of the drive cylinder (124) and at least a part of the inner face (130) of each cover strip (128) being secured to each other by a self-adhesive fastener (138).

9. Machine (10) intended for the production of corrugated board comprising an upper corrugator belt (12) and a lower corrugator belt (14), wherein the upper and lower corrugator belts each comprise at least one drive device according to any one of the claims 1 to 7, wherein the drive cylinder (124) is designed to drive the associated belt, wherein the upper and lower corrugator belts (12, 14) then drive the board between the upper and lower corrugator belts (12, 14).
